# FASCICULE DE BREVET EUROPEEN

(11) **EP 1 014 411 B1**
(45) Date de publication et mention de la délivrance du brevet: **01.03.2006**
(21) Numéro de dépôt: 99403123.5
(22) Date de dépôt: 13.12.1999
(51) Int. Cl.: H01H 33/52

(54) **Dispositif pour verrouiller à l'aide de serrures la manoeuvre manuelle d'un sectionneur**
Einrichtung zur Verriegelung der Handbetätigung eines Leistungsschalters unter Verwendung von Schlössern
Device using locks for locking the manual operation of a circuit breaker

(30) Priorité: 18.12.1998 FR 9815978
(43) Date de publication de la demande: 28.06.2000
(73) Titulaire: Areva T&D SA, 92309 Levallois-Perret Cedex (FR)
(72) Inventeur: Biquez, François, 69 530 Brignais (FR)
(74) Mandataire: Poulin, Gérard

(56) Documents cités:
- DE-B- 1 276 174
- DE-C- 527 559
- FR-A- 1 365 484
- US-A- 2 298 234

## Description

L'invention concerne les circuits de générateur dans les centrales de production d'électricité comme les installations à turbine à gaz par exemple.

Le document DE 527 559 montre un dispositif selon le préambule de la revendication 1.

De tels circuits comprennent entre le générateur et le transformateur réseau qui sont reliés entre eux par un jeu de barres, un disjoncteur de générateur et des appareils de commutation à deux ou trois positions de commutation, du type sectionneur de barres et/ou de mise à la terre. Un tel circuit de générateur peut en outre être relié à un dispositif de démarrage par l'intermédiaire de ce type d'appareil de commutation.

Ces différents appareils de commutation sont généralement conçus pour être manoeuvrés automatiquement de façon électrique sous la commande d'une centrale. Ils doivent aussi être conçus pour pouvoir être manoeuvrés manuellement à l'aide d'une manivelle pour le cas où surviendrait une panne électrique notamment au niveau de la centrale de commande automatique. Toutefois, il est primordial pour assurer l'intégrité des éléments du circuit, de procéder à leur manoeuvre manuelle en suivant une procédure bien précise.

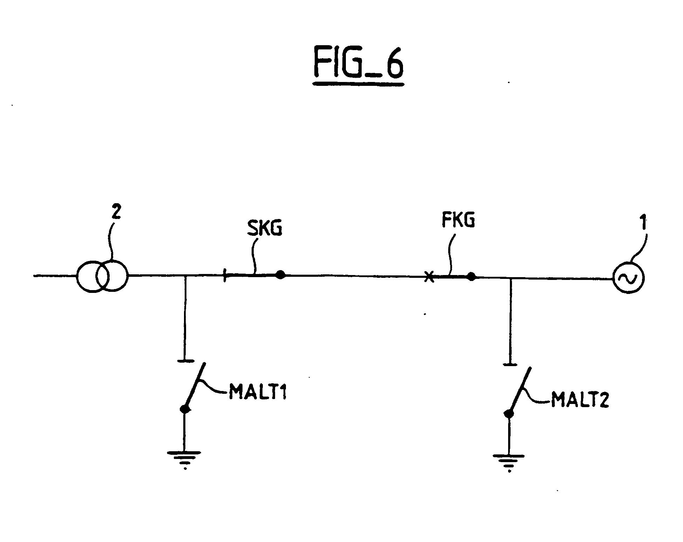

La figure 6 montre sous une forme très schématique un exemple de circuit de générateur comprenant un disjoncteur de générateur FKG en série avec un sectionneur de barres SKG à deux positions de commutation entre un générateur 1 et un transformateur de réseau 2 et deux sectionneurs de mise à la terre MALT1,MALT2 ayant chacun deux positions de commutation.

Figure 6, le disjoncteur de générateur FKG et le sectionneur de barres SKG sont fermés tandis que les sectionneurs de mise à la terre MALT1 et MALT2 sont ouverts. Les règles du verrouillage mutuel entre ces divers éléments qui sont communes au mode de manoeuvre automatique et au mode de manoeuvre manuelle sont les suivantes.

L'ouverture du sectionneur de barres SKG est interdite lorsque le disjoncteur de générateur FKG est fermé. La fermeture de l'un des sectionneurs de mise à la terre MALT1 et MALT2 est interdite lorsque le sectionneur de barres SKG est fermé. La fermeture du sectionneur de barres SKG est interdite lorsque l'un des sectionneurs de mise à la terre MALT1 et MALT2 est fermé. L'ordre à suivre pour manoeuvrer le sectionneur de barres SKG et les sectionneurs de mise à la terre MALT1 et MALT2 à partir de la configuration illustrée sur la figure 6 est la suivante. Le disjoncteur de générateur FKG doit d'abord être ouvert. Ensuite, le sectionneur de barres doit être ouvert et seulement ensuite chaque sectionneur de mise à la terre doit être fermé.

Pour des raisons de sécurité, il est donc nécessaire d'empêcher toute manoeuvre manuelle de ces appareils de commutation qui dérogerait à cet ordre.

Le but de l'invention est de proposer un dispositif pour verrouiller, à l'aide de serrures, la manoeuvre manuelle d'un sectionneur ayant une entrée de manivelle et autoriser, par une certaine séquence de manoeuvre par clé des serrures, la manoeuvre manuelle du sectionneur pour le faire passer d'une première position de commutation à une seconde position de commutation.

Selon l'invention, ce dispositif comprend une première serrure et une seconde serrure se manoeuvrant chacune avec au moins une clé pouvant être retirée de la serrure correspondante ou engagée dans cette serrure seulement quand cette serrure est verrouillée, un jeu de cames dont la rotation est liée à la manoeuvre du sectionneur et qui agissent sur les pennes desdites serrures pour empêcher la manoeuvre de la première serrure tant que le sectionneur n'occupe pas sa seconde position de commutation et empêcher la manoeuvre par clé de la seconde serrure dès que le sectionneur n'occupe plus la première position de commutation, les deux serrures étant disposées de façon que leur penne respectif en position avancée obture l'entrée de manivelle du sectionneur, le penne de la première serrure étant en position rétractée et le penne de la seconde serrure étant en position avancée quand le sectionneur occupe sa première position de commutation.

Un tel dispositif de verrouillage permet d'assurer un blocage de la manoeuvre manuelle du sectionneur à deux niveaux. En effet, pour pouvoir manoeuvrer manuellement un appareil de commutation équipé du dispositif selon l'invention, il faut d'abord manoeuvrer la seconde serrure pour dégager l'entrée de manivelle avec une première clé qui peut provenir d'un dispositif de verrouillage associé à un appareil de commutation devant être manoeuvré avant le sectionneur en question. Après que ce sectionneur ait été manoeuvré à l'aide de la manivelle pour passer dans sa seconde position de commutation, cette manivelle doit être enlevée pour pouvoir manoeuvrer la première serrure. A la suite de cette opération, la commande manuelle du sectionneur est condamnée et la clé provenant de cette première serrure peut être utilisée pour déverrouiller un autre dispositif de verrouillage associé à un autre appareil de commutation devant être manoeuvré manuellement seulement après le sectionneur. Par conséquent, avec un tel dispositif de verrouillage, il est possible de contraindre un opérateur à suivre un processus logique de manoeuvre manuelle d'un ensemble d'appareils de commutation.

Comme on le verra par la suite, le verrouillage mutuel des appareils de commutation montrés sur la figure 6 avec un ensemble de dispositifs de verrouillage conforme à l'invention ne requiert que l'utilisation de sept clés différentes. Ce dispositif faisant appel à des serrures conventionnelles mécaniques, il contribue à la réalisation d'un verrouillage mutuel des appareils de commutation qui est fiable, simple et peu coûteux. Un tel dispositif peut facilement être adapté pour réaliser un verrouillage mutuel entre un disjoncteur de générateur et un sectionneur ayant trois positions de commutation, ce sectionneur pouvant en outre être un sectionneur d'injection.

Le dispositif selon l'invention est décrit ci-après en détail et illustré sur les dessins.

La figure 1 montre de façon schématique un premier exemple de circuit de générateur incluant un disjoncteur de générateur, un sectionneur de barres ayant deux positions de commutation et deux sectionneurs de mise à la terre ayant chacun deux positions de commutation, dans lequel le disjoncteur de générateur et le sectionneur de barres sont fermés et les deux sectionneurs de mise à la terre sont ouverts, les sectionneurs étant équipés chacun d'un dispositif de verrouillage selon l'invention.

La figure 2 montre le circuit de générateur de la figure 1 avec les dispositifs de verrouillage selon l'invention quand le disjoncteur de générateur et le sectionneur de barres sont ouverts et les deux sectionneurs de mise à la terre sont fermés.

La figure 3 montre de façon schématique un second exemple de circuit de générateur incluant un disjoncteur de générateur et un sectionneur à trois positions de commutation dont une des trois positions de commutation est une position de mise à la terre, dans lequel le disjoncteur de générateur et le sectionneur sont fermés, le sectionneur étant équipé d'un dispositif de verrouillage selon l'invention.

La figure 4 montre le circuit de générateur de la figure 3 avec le dispositif de verrouillage selon l'invention quand le disjoncteur de générateur est ouvert et le sectionneur occupe sa position de mise à la terre.

La figure 5 montre le circuit de générateur de la figure 3 avec en plus un sectionneur d'injection et de mise à la terre ayant trois positions de commutation équipé d'un dispositif de verrouillage selon l'invention.

La figure 6 est un schéma simplifié d'un exemple de circuit de générateur.

La figure 6 a déjà été décrite ci-dessus.

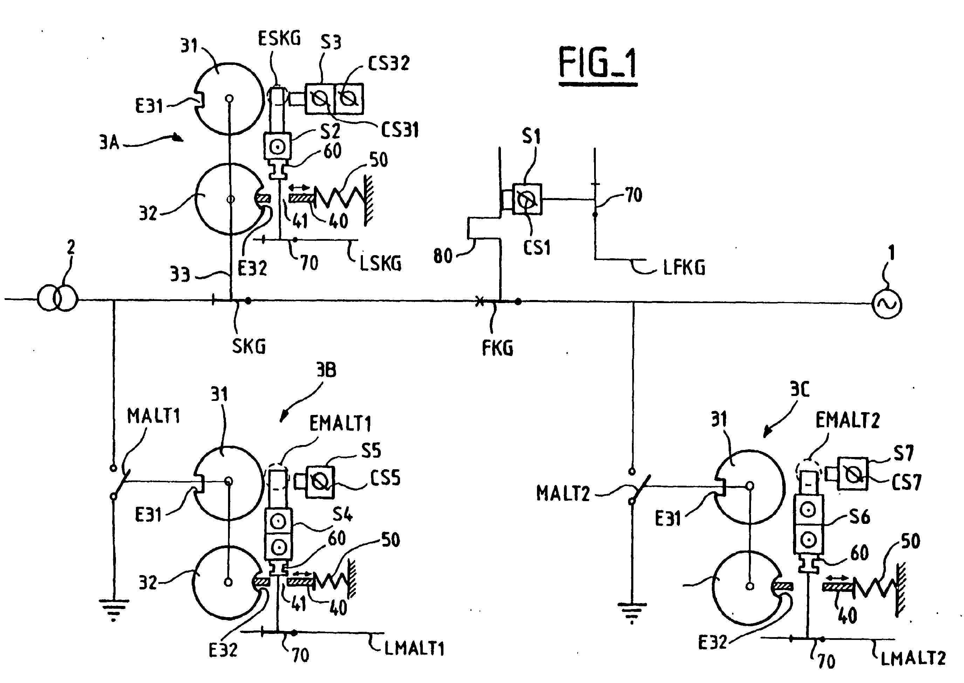

Le circuit de générateur illustré sur la figure 1 qui est identique à celui de la figure 6 comprend entre un générateur 1 et un transformateur réseau 2, un disjoncteur de générateur FKG, un sectionneur de barres SKG à deux positions de commutation et deux sectionneurs de mise à la terre MALT1 et MALT2 à deux positions de commutation. Sur la figure 1, le disjoncteur de générateur FKG et le sectionneur de barres SKG sont fermés tandis que les sectionneurs de mise à la terre MALT1 et MALT2 sont ouverts.

Dans ce circuit, le disjoncteur sert à découpler le générateur du réseau ; le sectionneur de barres SKG sert à isoler le générateur du réseau ; les sectionneurs de mise à la terre MALT1 et MALT2 connectées pour l'un entre le transformateur réseau et le sectionneur de barres et pour l'autre entre le générateur et le disjoncteur de générateur, servent à conduire des charges électriques capacitives du transformateur réseau vers la terre ou du générateur vers la terre de façon à permettre une maintenance sur ces appareils en toute sécurité.

Le sectionneur de barres SKG et chaque sectionneur de mise à la terre MALT1 et MALT2 sont équipés chacun d'un dispositif de verrouillage respectivement 3A,3B,3C conforme à l'invention et comportent chacun une entrée de manivelle respectivement ESKG,EMALT1 et EMALT2.

En se référant à titre d'exemple au dispositif de verrouillage 3A associé au sectionneur de barres SKG, chaque dispositif de verrouillage comprend de façon générale, deux serrures telles que S2 et S3 se manoeuvrant avec au moins une clé telle que CS1,CS31,CS32 qui peut être retirée de la serrure correspondante ou engagée dans celle-ci seulement quand la serrure est verrouillée c'est-à-dire quand le penne de cette serrure est complètement avancé. Ces deux serrures sont disposées de telle façon que leur penne respectif obture, en position avancée, l'entrée de manivelle du sectionneur telle que ESKG.

Le dispositif comporte aussi un jeu de cames dont la rotation est liée à la manoeuvre du sectionneur et donc au déplacement du contact mobile du sectionneur entre une première position de commutation et une seconde position de commutation. Quand le sectionneur occupe la première position de commutation, le penne de la première serrure telle que S3 est en position rétractée ce qui interdit le retrait de la clé telle que CS31,CS32 de cette serrure et le penne de la seconde serrure telle que S2 est en position avancée ce qui autorise l'engagement d'une clé dans cette serrure telle que CS1. Le penne de la seconde serrure obture toutefois l'entrée de manivelle ESKG du sectionneur. Ce jeu de cames est agencé pour agir sur les pennes des deux serrures pour empêcher la manoeuvre par clé de la première serrure tant que le sectionneur n'occupe pas sa seconde position de commutation et pour empêcher la manoeuvre par clé de la seconde serrure dès que le sectionneur n'occupe plus la première position de commutation.

Le blocage des deux serrures est en particulier obtenu par un jeu de cames comprenant, en se reportant au dispositif de verrouillage 3A associé au sectionneur SKG, une première came 31 ayant une encoche E31 dans laquelle peut s'engager le penne de la première serrure S3 lorsqu'il est en position avancée. Par conséquent, tant que cette encoche E31 ne fait pas face au penne de la serrure S3, celle-ci ne peut pas être manoeuvrée. Le jeu de cames comprend encore une seconde came 32 ayant une encoche E32 (de préférence semi-circulaire) dans laquelle peut s'engager une plaque 40 mobile en translation perpendiculairement au penne de la seconde serrure S2. La rotation de ces deux cames 31 et 32 est liée à la manoeuvre du sectionneur et ces deux cames sont liées en rotation entre elles (par exemple par le jeu d'un engrenage) comme indiqué par le trait 33 reliant les axes de rotation des deux cames 31 et 32 et le contact mobile du sectionneur SKG.

La plaque 40 est soumis à une force de rappel dirigée dans sa direction de déplacement en translation, cette force de rappel étant exercée par exemple par un ressort de compression 50. Cette force de rappel tend à pousser la plaque 40 contre la came 32. Le penne de la seconde serrure S2 est un penne traversant dont l'extrémité arrière présente une gorge 60 et qui peut s'engager dans un perçage 41 prévu dans la plaque 40. Quand l'encoche E32 de la came 32 fait face à la plaque 40, le perçage 41 de celle-ci fait face à l'extrémité arrière du penne traversant de la seconde serrure S2. La seconde serrure peut donc être manoeuvrée de façon à libérer l'entrée de manivelle ESKG en même temps que le penne traversant de la serrure S2, par son extrémité arrière, s'engage dans le perçage de la plaque 40. Quand l'encoche E32 de la came 32 ne fait pas face à la plaque 40 alors que l'extrémité arrière du penne traversant de la seconde serrure S2 est engagée dans le perçage 41 de la plaque 40, la came 32 repousse la plaque 40 qui s'engage dans la gorge 60 du penne traversant, bloquant ainsi toute manoeuvre de la seconde serrure. Le dispositif de verrouillage 3A est d'une conception relativement compact si les deux cames 31 et 32 sont superposées parallèlement au penne traversant de la seconde serrure S2 et si le penne de la première serrure S3 s'étend perpendiculairement au penne de la première serrure S2.

Le penne traversant de la seconde serrure S2 commande par ailleurs, par son déplacement, un contact 70 destiné à ouvrir ou fermer une ligne d'alimentation LSKG de la commande électrique du sectionneur SKG. Ce contact 70 est normalement ouvert pendant la manoeuvre manuelle du sectionneur pour empêcher qu'un retour d'ondes électriques dans la commande électrique du sectionneur SKG vienne perturber la manoeuvre manuelle du sectionneur.

Les dispositifs de verrouillage 3B,3C associés aux sectionneurs de mise à la terre MALT1 et MALT2 sont analogues à celui 3A associé au sectionneur SKG qui vient d'être décrit et les éléments identiques dans ces dispositifs portent les mêmes références.

Dans le schéma de circuit de générateur de la figure 1, le premier dispositif de verrouillage 3A associé au sectionneur SKG comprend une première serrure S3 ayant deux entrées de clé avec deux clés CS31 et CS32 et une seconde serrure S2 ayant une entrée de clé ; le second dispositif de verrouillage 3B associé au sectionneur MALT1 comprend une première serrure S5 ayant une entrée de clé avec une clé CS5 et une seconde serrure S4 ayant deux entrées de clé et le troisième dispositif de verrouillage 3C associé au sectionneur MALT2 comprend une première serrure S7 ayant une entrée de clé avec une clé CS7 et une seconde serrure S6 ayant deux entrées de clé.

En outre, au niveau du disjoncteur de générateur FKG, il est prévu une autre serrure S1 ayant une entrée de clé avec une clé CS1, la manoeuvre de la clé CS1 étant bloquée tant que le disjoncteur de générateur n'est pas ouvert. En particulier, la serrure S1 est montée face à une tringle 80 présentant un décrochement dans lequel peut s'engager le penne de cette serrure S1 seulement quand le disjoncteur de générateur est ouvert. Cette tringle 70 est mobile en translation perpendiculairement au penne de la serrure S1 en liaison avec la manoeuvre du disjoncteur de générateur.

A l'état initial du circuit de générateur, avant le passage en mode de commande manuelle, le disjoncteur de générateur est fermé, le sectionneur SKG occupe une première position de commutation correspondant à un état fermé et les deux sectionneurs de mise à la terre MALT1 et MALT2 occupent chacun une première position de commutation correspondant à un état ouvert.

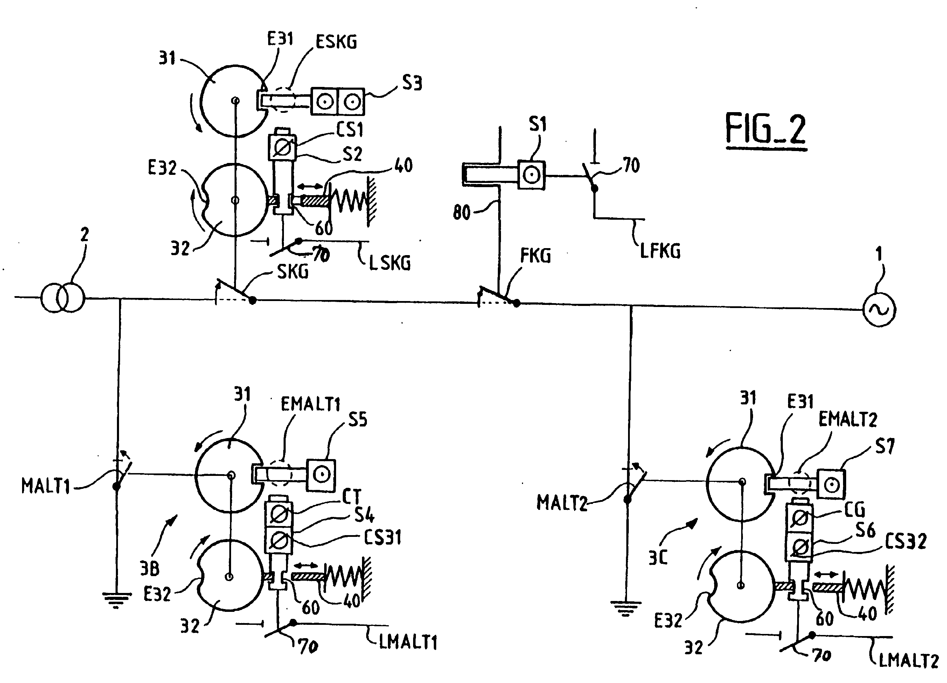

La manoeuvre manuelle de ces appareils doit conduire à l'état du circuit de générateur montré sur la figure 2 dans lequel le disjoncteur de générateur FKG et le sectionneur de barres SKG sont ouverts et les sectionneurs de mise à la terre MALT1 et MALT2 sont fermés.

Pour passer de l'état du circuit de générateur de la figure 1 à celui de la figure 2, l'opérateur doit procéder de la façon suivante.

Le disjoncteur de générateur FKG est ouvert, par exemple par appui sur un bouton poussoir, ce qui fait que le décrochement de la tringle 80 se place face au penne de la serrure S1. La serrure S1 est verrouillée en tournant la clé CS1 ce qui provoque l'engagement du penne de la serrure S1 dans le décrochement de la tringle 80 et l'ouverture de la ligne d'alimentation LFKG de la commande automatique du disjoncteur par le jeu du contact 70 lié au déplacement du penne de la serrure S1. La clé CS1 est retirée de la serrure S1 ce qui fait que la manoeuvre manuelle du disjoncteur FKG est bloquée.

La clé CS1 est engagée ensuite dans l'entrée de clé de la serrure S2 du dispositif de verrouillage 3A et la serrure S2 est verrouillée en manoeuvrant la clé CS1 ce qui fait que l'entrée de manivelle ESKG est libérée. En même temps, l'extrémité arrière du penne traversant de la serrure S2 s'engage dans la plaque 40 du dispositif 3A et le déplacement du penne de la serrure S2 provoque l'ouverture de la ligne d'alimentation LSKG de la commande automatique du sectionneur SKG. A noter qu'à ce stade de la manoeuvre manuelle du sectionneur SKG, la plaque 40 est engagée dans l'encoche E32 de la came 32 tandis que l'encoche E31 est dans une position diamétralement opposée au penne de la serrure S3. Le sectionneur SKG est ouvert à la manivelle ce qui provoque une rotation de 180° des cames 31 et 32 du dispositif 3A. Dès le début de sa rotation, la came 32 pousse la plaque 40 qui s'engage dans la gorge 60 du penne de la serrure S2 bloquant ainsi la clé CS1 dans la serrure S2. Par ailleurs, l'encoche E31 de la came 31 vient face au penne de la serrure S3 quand le sectionneur SKG est complètement ouvert. La manivelle est retirée de l'entrée de manivelle ESKG et les deux clés CS31 et CS32 sont tournées pour verrouiller la serrure S3 ce qui provoque l'obturation de l'entrée de manivelle ESKG par le penne de la serrure S3, condamnant toute manoeuvre du sectionneur SKG. Chaque clé CS31 et CS32 peut être retirée de la serrure S3.

Pour fermer le sectionneur de mise à la terre MALT1, l'opérateur engage la clé CS31 dans une des deux entrées de clé de la serrure S4 du dispositif 3B et une autre clé CT venant d'un système de verrouillage à clé associé au transformateur dans l'autre entrée de clé de la serrure S4. Cette clé CT qui est rapportée au niveau du sectionneur de mise à la terre MALT1 doit être de nature à certifier que le transformateur est bien découplé du réseau.

Les clés CT et CS31 sont manoeuvrées pour déverrouiller la serrure S4 ce qui libère l'entrée de manivelle EMALT1 du sectionneur MALT1. En même temps, l'extrémité arrière du penne traversant de la serrure S4 s'engage dans la plaque 40 du dispositif 3B et commande par son déplacement le contact 70 du dispositif 3B qui ouvre la ligne d'alimentation LMALT1 de la commande automatique du sectionneur MALT1. Le sectionneur MALT1 est fermé manuellement à la manivelle et cette manivelle est retirée de l'entrée de manivelle EMALT1. Dès le début de la manoeuvre manuelle du sectionneur MALT1, la came 32 du dispositif 3B pousse la plaque 40 du dispositif 3B dans la gorge 60 du penne traversant de la serrure S4 ce qui bloque les clés CT et CS31 dans la serrure S4. A la fermeture complète du sectionneur MALT1, l'encoche E31 de la came 31 du dispositif 3B fait face au penne de la serrure S5. La serrure S5 est verrouillée en tournant la clé CS5 ce qui provoque l'obturation de l'entrée de manivelle EMALT1. La clé CS5 est ensuite remise sur le système de verrouillage à clé du transformateur pour certifier que le sectionneur de mise à la terre MALT1 est fermé et que les interventions sur le transformateur sont possibles.

Pour fermer le sectionneur de mise à la terre MALT2, l'opérateur engage maintenant la clé CS32 dans une des deux entrées de clé de la serrure S6 du dispositif 3C et une autre clé CG venant d'un système de verrouillage à clé associé au générateur dans l'autre entrée de clé de la serrure S6. Cette clé CG qui est rapportée au niveau du sectionneur de mise à la terre MALT2 doit être de nature à certifier que le générateur n'est pas en charge.

Les clés CG et CS32 sont manoeuvrées pour déverrouiller la serrure S6 ce qui libère l'entrée de manivelle EMALT2 du sectionneur MALT2. En même temps, l'extrémité arrière du penne traversant de la serrure S6 s'engage dans la plaque 40 du dispositif 3C et son déplacement provoque, par l'intermédiaire du contact 70, l'ouverture de la ligne d'alimentation LMALT2 de la commande automatique du sectionneur MALT2. Le sectionneur MALT2 est fermé manuellement à la manivelle et cette manivelle est retirée de l'entrée de manivelle EMALT2. Dès le début de la manoeuvre manuelle du sectionneur MALT2, la came 32 du dispositif 3C pousse la plaque 40 dans la gorge 60 du penne traversant de la serrure S6 ce qui bloque les clés CG et CS32 dans la serrure S6. A la fermeture complète du sectionneur MALT2, l'encoche E31 de la came 31 du dispositif 3C fait face au penne de la serrure S7. La serrure S7 est verrouillée en tournant la clé CS7 ce qui provoque l'obturation de l'entrée de manivelle EMALT2. La clé CS7 est ensuite remise sur le système de verrouillage à clé du générateur pour certifier que le sectionneur de mise à la terre MALT2 est fermé et que les interventions sur le générateur sont possibles.

On voit donc que le système d'interverrouillage qui utilise trois dispositifs de verrouillage conforme à l'invention requiert pour le cas du circuit de générateur des figures 1 et 2 seulement sept clés différentes.

Le retour à l'état initial du circuit de générateur de la figure 1 se fait en suivant l'ordre inverse de manipulation des clés indiqué ci-dessus.

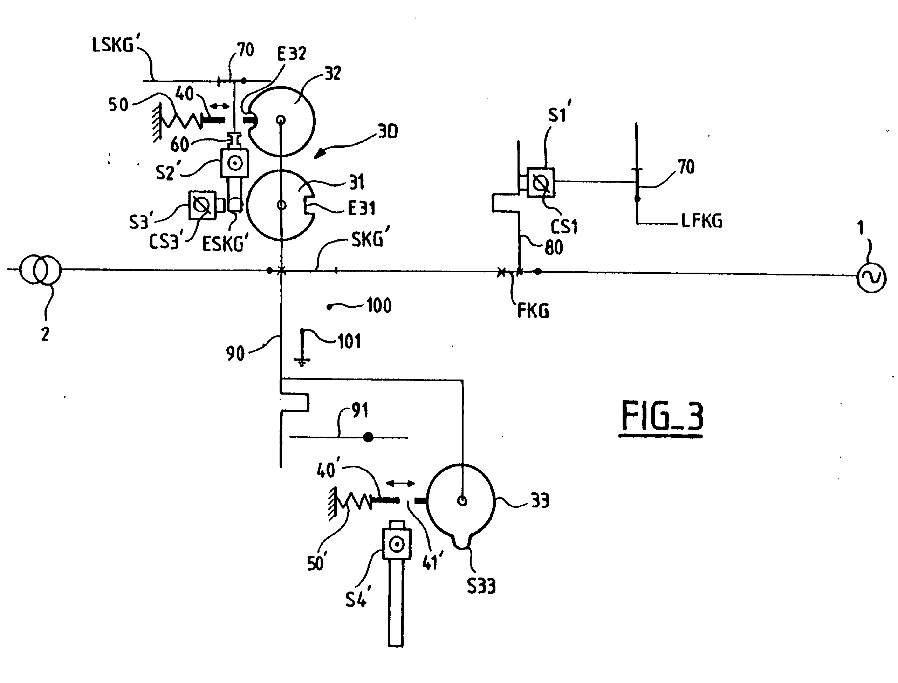

Sur la figure 3, un dispositif de verrouillage 3D selon l'invention verrouille la commande manuelle d'un sectionneur à trois positions de commutation SKG' monté dans un circuit de générateur en série avec un disjoncteur de générateur FKG entre un générateur 1 et un transformateur réseau 2. Le sectionneur SKG' sert à la fois de sectionneur de barres dans sa position de commutation indiquée par 100 et de sectionneur de mise à la terre dans sa position de commutation indiquée par 101.

Le dispositif de verrouillage 3D est analogue à celui 3A décrit pour le sectionneur SKG à ceci près que ses deux serrures S2' et S3' comportent chacune une seule entrée de clé et que la rotation des cames 31 et 32 commande également le déplacement d'une tringle 90 comportant un décrochement et la rotation d'une autre came 33 à saillie S33. Le décrochement de la tringle 90 coopère avec un bras de levier 91 formant une butée mobile, lequel levier est actionné par le penne d'une serrure S4' pouvant être manoeuvrée par clé et dont l'extrémité arrière de son penne traversant comporte une gorge 61 qui coopère avec une plaque 40' mobile en translation perpendiculairement au penne de la serrure S4', cette plaque 40' ayant un perçage 41' dans lequel peut s'engager l'extrémité arrière du penne de la serrure S4'. La plaque 40' est sollicitée dans la direction perpendiculaire au penne de la serrure S4', à la fois par un ressort de compression 50' et par une came 33 de façon analogue à la plaque 40 du dispositif 3A.

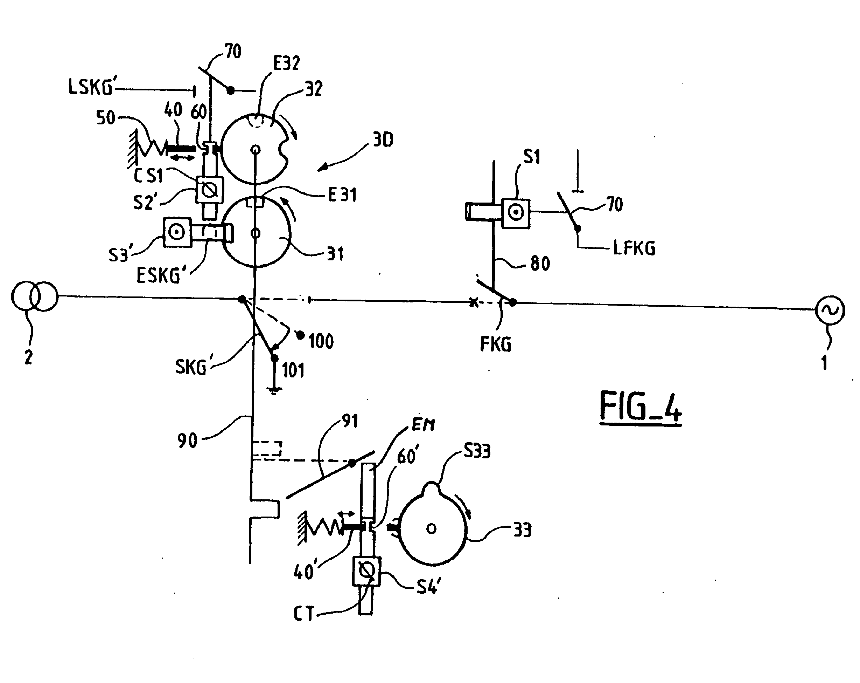

Sur la figure 3, dans l'état initial du circuit de générateur, le disjoncteur de générateur FKG est fermé, le sectionneur SKG' est fermé sur le jeu de barres. La manoeuvre manuelle de ces appareils doit conduire à l'état du circuit de générateur montré sur la figure 4 dans lequel le disjoncteur de générateur FKG est ouvert et le sectionneur SKG' se trouve dans une troisième position de commutation correspondant à une mise à la terre.

Pour passer de l'état du circuit de générateur de la figure 3 à celui de la figure 4, l'opérateur doit procéder de la façon suivante.

Le disjoncteur de générateur FKG est ouvert, comme indiqué précédemment en appuyant sur un bouton poussoir ce qui fait que le décrochement de la tringle 80 se place face au penne de la serrure S1. La serrure S1 est verrouillée en tournant la clé CS1 ce qui provoque l'engagement du penne de la serrure S1 dans le décrochement de la tringle 80 et en même temps l'ouverture de la ligne d'alimentation LFKG de la commande automatique du disjoncteur par le jeu du contact 70 lié au déplacement du penne de la serrure S1.

La clé CS1 est retirée de la serrure S1 ce qui fait que la manoeuvre du disjoncteur FKG est bloquée.

La clé CS1 est engagée ensuite dans l'entrée de clé de la serrure S2' du dispositif 3D et la serrure S2' est verrouillée en manoeuvrant la clé CS1 ce qui fait que l'entrée de manivelle ESKG' est libérée. En même temps, l'extrémité arrière du penne traversant de la serrure S2' s'engage dans la plaque 40 du dispositif 3D et le déplacement du penne de la serrure S2' provoque l'ouverture de la ligne d'alimentation LSKG' de la commande automatique du sectionneur SKG' par l'intermédiaire du contact 70. Le sectionneur SKG' est manoeuvré à la manivelle pour passer dans une seconde position de commutation indiquée par la référence 100 qui correspond à son état ouvert. La manoeuvre du sectionneur provoque une première rotation de 90° des cames 31 et 32. Dès le début de sa rotation, la came 32 repousse la plaque 40 qui s'engage dans la gorge 60 du penne de la serrure S2' bloquant ainsi la clé CS1 dans la serrure S2'. L'encoche E31 de la came 31 du dispositif 3D, pendant cette première manoeuvre du sectionneur, ne fait pas encore face au penne de la serrure S3' comme visible en traits interrompus sur la figure 4. Pendant cette première manoeuvre du sectionneur SKG' , la rotation de 90° des cames 31 et 32 provoque le déplacement en translation de la tringle 90 et le décrochement de cette tringle 90 vient en butée contre le levier 91, bloquant le sectionneur dans une position d'ouverture. En même temps, la came 33 a tourné de 90° de sorte que la saillie S33 vient pousser la plaque 40' pour que le perçage 41' de cette plaque 40' fasse face au penne traversant de la serrure S4'.

Pour faire passer le sectionneur SKG' de sa seconde position de commutation à la troisième position de commutation correspond à une position de mise à la terre indiquée par la référence 101, l'opérateur doit disposer d'une clé CT venant d'un système de verrouillage à clé associé au transformateur. Cette clé CT qui est rapportée au niveau du sectionneur à trois positions de commutation doit être de nature à certifier que le transformateur est bien découplé du réseau. La clé CT est engagée dans l'entrée de clé de la serrure S4' pour déverrouiller cette dernière. La manoeuvre de la serrure S4'avec la clé CT provoque la sortie de l'extrémité arrière du penne traversant de la clé S4' qui vient s'engager dans le perçage 41' de la plaque 40' et agit sur le bras de levier 91 pour qu'il s'efface devant le décrochement de la tringle 90. A noter qu' il est nécessaire de prévoir un électroaimant EM entre l'extrémité arrière de ce penne et le bras de levier 91 pour venir effacer ce bras de levier 91 pour passer de la seconde position de commutation à la troisième position de commutation quand le sectionneur est manoeuvré par commande électrique et non plus par clé en mode manuel.

Ensuite, le sectionneur est encore manoeuvré à la manivelle pour le faire passer dans sa troisième position de commutation et la manivelle est retirée de l'entrée de manivelle ESKG'. Dès le début de cette manoeuvre, la saillie S33 de la came 33 libère la plaque 40' qui s'engage alors dans la gorge 60' du penne de la serrure S4' ce qui fait que cette dernière est bloquée et que la clé CT ne peut plus être retirée de la serrure S4'.

Quand le sectionneur SKG' occupe sa position de mise à la terre, l'encoche E31 de la came 31 fait face au penne de la serrure S3. La clé CS3' peut être manoeuvrée pour verrouiller la serrure S3' et obturer l'entrée de manivelle ESKG'. Cette clé CS3' est ensuite remise sur le système de verrouillage à clé du transformateur pour certifier que le sectionneur SKG' est dans sa position de mise à la terre et que les interventions sur le transformateur sont possibles.

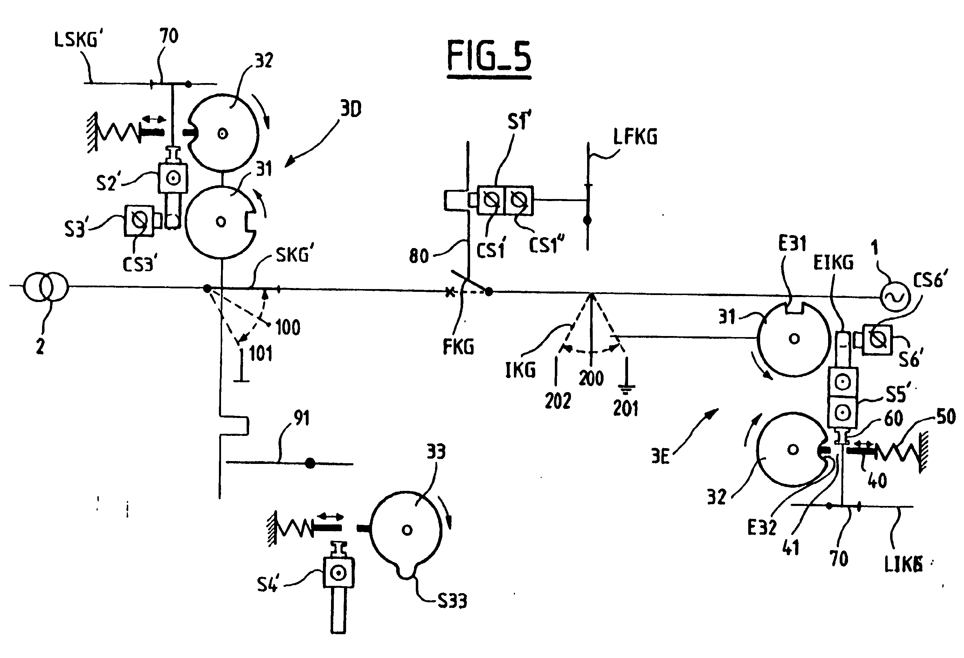

La figure 5 illustre encore un autre exemple de circuit de générateur incluant entre le générateur 1 et le transformateur réseau 2, un disjoncteur de générateur FKG en série avec le sectionneur SKG' ayant trois positions de commutation dont une position de mise à la terre et un sectionneur de mise à la terre IKG à trois positions de commutation dont une position d'ouverture de la mise à la terre indiquée par la référence 200, une position de fermeture de la mise à la terre indiquée par la référence 201 et une position de fermeture d'un circuit de démarrage indiquée par la référence 202.

Comme visible sur la figure 5, le dispositif de verrouillage 3D associé au sectionneur SKG' est identique dans sa conception et son fonctionnement à celui des figures 3 et 4.

Le dispositif de verrouillage 3E associé au sectionneur IKG comprend une première serrure S5' ayant deux entrées de clé et un penne traversant dont l'extrémité arrière est muni d'une gorge 60 qui coopère avec une plaque 40 munie d'un perçage 41. Le déplacement du penne traversant agit également sur un contact 70 ouvrant ou fermant la ligne d'alimentation électrique LIKG de la commande automatique du sectionneur IKG. La plaque 40 est sollicitée dans une direction perpendiculaire au penne traversant de la serrure S5' par un ressort 50 et par une came 32 ayant une encoche E32 dans laquelle peut s'engager la plaque 40. Le dispositif 3E comporte encore une seconde serrure S6' ayant une entrée de clé et une seconde came 31 ayant une encoche E31 dans laquelle peut s'engager le penne de la serrure S6'. Les pennes des deux serrures S5' et S6' sont disposés également pour pouvoir obturer, en position avancée, l'entrée de manivelle EIKG du sectionneur IKG.

La serrure S1' associée au disjoncteur de générateur comporte par ailleurs deux entrées de clé avec deux clés CS1' et CS1''.

En mode de commande manuelle, l'ouverture et la mise à la terre du sectionneur SKG' se fait de façon identique à ce qui a été décrit précédemment en relation avec les figures 3 et 4 en utilisant la clés CS1' à la place de la clé CS1.

A partir de la configuration illustrée sur la figure 5 dans laquelle le disjoncteur de générateur FKG est ouvert et le sectionneur de mise à la terre IKG occupe la première position de commutation 200, la manoeuvre de ce sectionneur pour le placer dans sa seconde position de commutation 201 se fait de la façon suivante. La serrure S1' associé au disjoncteur FKG est verrouillée en manoeuvrant par exemple la clé CS1'' ce qui fait que le penne de cette serrure s'engage dans le décrochement de la tringle 80 bloquant la manoeuvre manuelle du disjoncteur en position d'ouverture.

La clé CS1" est ensuite retirée de la serrure S1' et engagée dans l'une des deux entrées de clé de la serrure S5'. Une autre clé provenant du système de verrouillage par clé du générateur est engagée dans l'autre entrée de clé de la serrure S5' et ces deux clés sont manoeuvrées pour déverrouiller la serrure S5'. Le déplacement du penne de la serrure S5' provoque, par l'intermédiaire du contact 70, l'ouverture de la ligne LIKG d'alimentation du sectionneur de mise à la terre IKG. L'entrée de manivelle EIKG du sectionneur de mise à la terre IKG est libérée et ce dernier est manoeuvré pour passer dans la position de commutation 201. La manoeuvre manuelle du sectionneur IKG provoque une rotation de 90° des cames 31 et 32 du dispositif 3E de telle sorte que l'encoche E31 fait face au penne de la serrure S6' tandis que la came 32 repousse la plaque 40 dans la gorge 60 du penne de la serrure S5' . La manivelle est retirée de l'entrée de manivelle EIKG et la serrure S6' est verrouillée à l'aide de la clé CS6' qui est ensuite retirée et remise sur le système de verrouillage par clé du générateur pour certifier qu'une intervention sur ce dernier est possible.

## Revendications

1. Un dispositif pour verrouiller, à l'aide de serrures, la manoeuvre manuelle d'un sectionneur (SKG,MALT1,MALT2, SKG',IKG) ayant une entrée de manivelle et autoriser, par une certaine séquence de manoeuvre par clé des serrures, la manoeuvre manuelle du sectionneur pour le faire passer d'une première position de commutation à une seconde position de commutation, comprenant une première serrure (S3,S5,S7,S3',S6') et une seconde serrure (S2,S4,S6,S2',S5'), un jeu de cames (31, 32) dont la rotation est liée à la manoeuvre du sectionneur, **caractérisé en ce que** lesdites serrures se manoeuvrant chacune avec au moins une clé pouvant être retirée de la serrure correspondante ou engagée dans cette serrure seulement quand cette serrure est verrouillée, et **en ce que** lesdites cames agissent sur les pennes desdites serrures pour empêcher la manoeuvre de la première serrure tant que le sectionneur n'occupe pas sa seconde position de commutation et empêcher la manoeuvre par clé de la seconde serrure dès que le sectionneur n'occupe plus la première position de commutation, les deux serrures étant disposées de façon que leur penne respectif en position avancée obture l'entrée de manivelle du sectionneur, le penne de la première serrure étant en position rétractée et le penne de la seconde serrure étant en position avancée quand le sectionneur occupe sa première position de commutation.

2. Le dispositif selon la revendication 1, dans lequel la seconde serrure (S2, S4, S6, S2', S5') a un penne traversant et le jeu de cames comprend une première came (31) ayant une encoche (E31) dans laquelle le penne de la première serrure peut s'engager en position avancée, une seconde came (32) ayant une encoche (E32) dans laquelle peut s'engager une plaque (40) mobile en translation suivant une direction perpendiculaire au penne traversant de la seconde serrure, un élément élastique (50) exerçant une force de rappel suivant ladite direction qui tend à pousser ladite plaque contre la seconde came, ladite plaque coopérant avec l'arrière du penne traversant de la seconde serrure pour autoriser ou interdire la manoeuvre par clé de celle-ci suivant qu'elle est ou non engagée dans l'encoche de la seconde came.

3. Le dispositif selon la revendication 2, dans lequel le penne traversant de la seconde serrure (S2,S4,S6,S2',S5') commande par son déplacement un contact (70) destiné à fermer ou à ouvrir une ligne d'alimentation (LSKG, LMALT1, LMALT2, LSKG' , LIKG) d'une commande électrique du sectionneur.

4. Le dispositif selon l'une des revendications 1 à 3, dans lequel la première serrure (S3,S5') se manoeuvre avec deux clés différentes.

5. Le dispositif selon l'une des revendications 1 à 3, dans lequel la seconde serrure (S4,S6,S5')se manoeuvre avec deux clés différentes.

6. Un circuit de générateur comprenant un sectionneur de barres (SKG) ayant deux positions de commutation et deux sectionneurs de mise à la terre (MALT1,MALT2) ayant chacun deux positions de commutation, un dispositif selon la revendication 4, un dispositif selon la revendication 5, et dans lequel la manoeuvre manuelle du sectionneur de barres est verrouillée par ledit dispositif (3A) selon la revendication 4 et la manoeuvre manuelle de chaque sectionneur de mise à la terre est verrouillée par ledit dispositif (3B,3C)selon la revendication 5.

7. Un circuit de générateur comprenant un sectionneur ayant trois positions de commutation (SKG') dont une des trois positions est une position de mise à la terre, un dispositif selon l'une des revendications 1 à 3, et dans lequel la manoeuvre manuelle du sectionneur à trois positions de commutation est verrouillée par ledit dispositif (3D).

8. Un circuit de générateur selon la revendication 7, comprenant en outre un sectionneur de mise à la terre ayant trois positions de commutations (IKG) dont une des trois positions est une position de mise à la terre et dans lequel la manoeuvre manuelle du sectionneur de mise à la terre est verrouillée par un dispositif (3E)selon la revendication 5.

## Patentansprüche

1. Vorrichtung zum Verriegeln der manuellen Betätigung eines Trennschalters (SKG,MALT1,MALT2,SKG',IKG) mit einem Handgriffeingang mittels Schließmechanismen, und zum Ermöglichen der manuellen Betätigung des Trennschalters mittels einer bestimmten Schlüssel-Betätigungssequenz der Schließmechanismen, um ihn (den trennschalter) von einer ersten Schaltposition zu einer zweiten Schaltposition zu bringen, umfassend einen ersten Schließmechanismus (S3,S5,S7,S3',S6'), einen zweiten Schließmechanismus (S2,S4,S6,S2',S5') und ein Nockenpaar (31,32), dessen Drehung mit der Betätigung des Trennschalters verbunden ist, **dadurch gekennzeichnet, dass** die Schließmechanismen, von denen jeder mit mindestens einem Schlüssel betätigt wird, von dem entsprechenden Schloss nur dann abgezogen werden können oder in dieses eingreifen können, wenn dieses Schloss verriegelt ist, und dass die Nocken auf die Bärte der Schließmechanismen einwirken, um die Betätigung des ersten Schließmechanismus zu verhindern, solange der Trennschalter (noch) nicht seine zweite Schaltposition einnimmt, und die Schlüsselbetätigung des zweiten Schließmechanismus zu verhindern, sobald der Trennschalter nicht mehr die erste Schaltposition einnimmt, wobei die beiden Schließmechanismen derart angeordnet sind, dass ihr jeweiliger Bart in der vorgeschobenen Position den Handgriffeingang des Trennschalters versperrt, wobei sich der Bart des ersten Schließmechanismus in zurückgezogener Position befindet und der Bart des zweiten Schließmechanismus sich in vorgeschobener Position befindet, wenn der Trennschalter seine erste Schaltposition einnimmt.

2. Vorrichtung nach Anspruch 1, wobei der zweite Schließmechanismus (S2,S4,S6,S2',S5') einen durchgehenden Bart aufweist und das Nockenpaar einen ersten Nocken (31) mit einer Ausnehmung (E31) umfasst, mit der der Bart des ersten Schließmechanismus in der vorgeschobenen Position in Eingriff kommen kann, einen zweiten Nocken (32) mit einer Ausnehmung (E32), mit der eine bewegliche Platte (40), die sich in einer zu dem durchgehenden Bart des zweiten Schließmechanismus senkrechten Richtung vorwärtsbewegt in Eingriff kommen kann, ein elastisches Element (50), das eine Rückstellkraft in der genannten Richtung ausübt, welche dazu tendiert, die Platte gegen den zweiten Nocken zu drücken, wobei die Platte mit der Rückseite des durchgehenden Bartes des zweiten Schließmechanismus zusammenwirkt, um die Schlüsselbetätigung desselben zu ermöglichen oder zu verhindern, je nachdem, ob dieser mit der Ausnehmung des zweiten Nockens in Eingriff steht oder nicht.

3. Vorrichtung nach Anspruch 2, wobei der durchgehende Bart des zweiten Schließmechanismus (S2,S4,S6,S2',S5') durch seine Bewegung einen Kontakt (70) steuert, der zum Schließen oder Öffnen einer Versorgungsleitung (LSKG,LMALT1,LMALT2, LSKG',LIKG) einer elektrischen Steuerung des Trennschalters bestimmt ist.

4. Vorrichtung nach einem der Ansprüche 1 bis 3, wobei der erste Schließmechanismus (S3,S5') mit zwei unterschiedlichen Schlüsseln betätigt wird.

5. Vorrichtung nach einem der Ansprüche 1 bis 3, wobei der zweite Schließmechanismus (S4, S6, S5') mit zwei unterschiedlichen Schlüsseln betätigt wird.

6. Generatorschaltung mit
einem Barren-Trennschalter (SKG), der zwei Schaltpositionen und zwei Erdungs-Trennschalter (MALT1, MALT2) aufweist, von denen jeder zwei Schaltpositionen hat, einer Vorrichtung gemäß Anspruch 4 und einer Vorrichtung gemäß Anspruch 5, wobei die manuelle Betätigung des Barren-Trennschalters durch die Vorrichtung (3A) gemäß Anspruch 4 verriegelt wird und die manuelle Betätigung jedes Erdungs-Trennschalters durch die Vorrichtung (3B,2C) gemäß Anspruch 5 verriegelt wird.

7. Generatorschaltung mit
einem Trennschalter (SKG') mit drei Schaltpositionen, wobei eine der drei Positionen eine Erdungsposition ist, und mit einer Vorrichtung gemäß einem der Ansprüche 1 bis 3, und wobei die manuelle Betätigung des Trennschalters mit drei Schaltpositionen von der Vorrichtung (3D) verriegelt wird.

8. Generatorschaltung nach Anspruch 7, ferner mit einem Erdungs-Trennschalter mit drei Schaltpositionen (IKG), wobei eine der drei Positionen eine Erdungsposition ist und die manuelle Betätigung des Erdungs-Trennschalters von einer Vorrichtung (3E) gemäß Anspruch 5 verriegelt wird.

## Claims

1. An interlock device using locks to prevent manual actuation of a switch (SKG, MALT1, MALT2, SKG', IKG) having a handle inlet, and to allow the switch to be actuated manually in a certain sequence of operations determined by using keys for the locks, thereby enabling the switch to pass from a first switching position to a second switching position, the device comprising a first lock (S3, S5, S7, S3', S6') a second lock (S2, S4, S6, S2', S5'), and a set of cams (31, 32) whose rotation is tied to actuation of the switch, the device being **characterized in that** each of said locks is operable by means of at least one key capable of being withdrawn from the corresponding lock or of being engaged in said lock only when the lock is in its locked position, and **in that** said cams act on the bolts of said locks to prevent the first lock from being operated so long as the second switch is not in its second switching position and to prevent the second lock being operated by its key as soon as the second switch no longer occupies its first switching position, both locks being disposed in such a manner that their respective bolts, when in the advanced position, close the handle inlet of the switch, the bolt of the first lock being in its retracted position and the bolt of the second lock being in its advanced position when the switch is in its first switching position.

2. The device of claim 1, in which the second lock (S2, S4, S6, S2', S5') has a through volt and the set of cams comprises a first cam (31) having a notch (E31) in which the bolt of the first lock can engage in its advanced position, a second cam (32) having a notch (E32) in which a plate (40) that moves in translation in a direction perpendicular to the through bolt of the second lock can engage, a resilient element (50) exerting a return force along said direction tending to urge said plate against the second cam, said plate cooperating with the rear of the through bolt of the second lock to authorize or prevent the lock being operated by key, depending on whether or not it is engaged in the notch of the second cam.

3. The device of claim 2, in which the through bolt of the second lock (S2, S4, S6, S2', S5') on moving controls a contact (70) designed to close or open a power supply line (LSKG, LMALT1, LMALT2, LSKG', LIKG) of electrical control means of the switch.

4. The device of any one of claims 1 to 3, in which the first lock (S3, S5') is operated using two different keys.

5. The device according to any one of claims 1 to 3, in which the second lock (S4, S6, S5') is operated using two different keys.

6. A generator circuit comprising a busbar switch (SKG) having two switching positions, and two grounding switches (MALT1, MALT2) each having two switching positions, a device according to claim 4, and a device according to claim 5, and in which manual actuation of the bar switch is prevented by said device (3A) according to claim 4, and manual actuation of each grounding switch is prevented by said device (3B, 3C) according to claim 5.

7. A generator circuit comprising a switch having three switching positions (SKG'), one of which positions is a grounding position, and a device according to any one of claims 1 to 3, and in which manual actuation of the switch having three switching positions is prevented by said device (3D).

8. A generator circuit according to claim 7, further comprising a grounding switch having three switching positions (IKG), one of which three positions is a grounding position, and in which manual actuation of the grounding switch is prevented by a device (3E) according to claim 5.
